# EUROPEAN PATENT APPLICATION

(11) **EP 4 745 898 A1**
(43) Date of publication of application: **20.05.2026**
(21) Application number: 23944974.7
(22) Date of filing: 29.12.2023
(51) Int. Cl.: G06T 11/20

(54) **CALCULATION METHOD BASED ON AT LEAST TWO SURVEY FIGURES SURVEYED AND MAPPED BY SURVEYING APPARATUS**

(30) Priority: 10.07.2023 CN 202310843286
(71) Applicant: Northwest Instrument Inc., New Jersey 07801 (US); Northwest Instrument (Shanghai) Co., Ltd., Shanghai 201707 (CN)
(72) Inventor: SHI, Xin, Shanghai 201707 (CN); ZHOU, Yang, Shanghai 201707 (CN); ZHANG, Mingyu, Shanghai 201707 (CN)
(74) Representative: Isarpatent
(86) International application number: PCT/CN2023/143130
(87) International publication number: WO 2025/010969

(57) **Abstract**

The present disclosure discloses a calculation method based on at least two measured patterns measured by a measuring device. The at least two measured patterns are closed patterns. The calculation method includes: obtaining a selection of a relative position of the at least two measured patterns to form a composite pattern; and calculating the area of at least one continuous region within the composite pattern after the relative position of the at least two measured patterns is determined. Through this approach, it can not only design based on surveying results but also incorporate the user's selection of the relative position of at least two measured patterns, that is, different combinations of measured patterns. Furthermore, based on this foundation, it can calculate the area of at least one continuous region within the newly designed or selected combination of measured patterns.

## Description

### TECHNICAL FIELD

The present disclosure relates to the field of surveying and mapping, and more specifically relates to a calculation method based on at least two measured patterns measured by a measuring device.

### BACKGROUND

In existing technologies, it is challenging to rapidly calculate the actual areas of multiple patterns within complex scenes requiring mapping. Consequently, calculating the area of a new composite measurement pattern formed by combining multiple measurement patterns presents a significant difficulty. Existing technologies offer virtually no solutions to address this critical issue.

### SUMMARY

To address the aforementioned technical problems in the prior art, namely that conventional surveying devices can essentially only measure the area of a single geometric pattern, but cannot measure the areas of multiple measured patterns or the new measured patterns formed by them, the inventors of the present disclosure innovatively conceived a novel calculation method. This method is implemented based on at least two measured patterns surveyed by the measuring device. It forms a composite pattern, i.e., a new measured pattern, by acquiring a relative position of the at least two measured patterns. Subsequently, after determining the relative position of the at least two measured patterns, the area of at least one continuous region within the composite pattern is calculated. Through this approach, it can not only design based on surveying results but also incorporate the user's selection of the relative position of at least two measured patterns, that is, different combinations of measured patterns. Furthermore, based on this foundation, it can calculate the area of at least one continuous region within the newly designed or selected combination of measured patterns. In other words, the area calculation for at least one new continuous zone is based on the delineation of measured patterns, but it is not limited to this. It also incorporates additional considerations, such as the user's design intent regarding the relative positioning of the delineated measured patterns. This will be particularly crucial for construction design.

Specifically, the present disclosure proposes a calculation method based on at least two measured patterns measured by a measuring device, wherein the at least two measured patterns are closed patterns. The calculation method comprises:
obtaining a selection of a relative position of the at least two measured patterns to form a composite pattern; and
calculating the area of at least one continuous region within the composite pattern after the relative position of the at least two measured patterns is determined.

The calculation method proposed in this disclosure enables users of measuring devices or surveying tools to perform secondary design on the measured patterns. Furthermore, the area of at least one continuous region within the secondary-designed pattern can also be calculated using the method proposed herein. Thus, the calculation of the area for this new continuous region is based on the patterns' construction. but is not limited to the drawing of the measured patterns. It also incorporates additional considerations, such as the user's design outcomes regarding the relative position of the measured patterns. This proves particularly crucial for construction design.

In one embodiment of the present disclosure, the at least two measured patterns at least have a partially overlapping region. The calculation method further comprises: acquiring a selection for at least one continuous region within the composite pattern; and calculating the area of the selected continuous region.

This approach enables the selection of specific areas of interest within a composite pattern designed for a given position, followed by the calculation of the area of the selected continuous region. This facilitates the calculation of the area of regions of interest, thereby providing essential support for subsequent tasks related to those areas, such as cost calculations and material estimates, which is particularly crucial for construction design projects like renovations.

In one embodiment of the present disclosure, the at least two measured patterns at least have a partially overlapping region. The calculation method further comprises:
calculating a first area of the first pattern formed by the outermost contour of the composite pattern; calculating a second area of a measured pattern within the first pattern; calculating a third area of the remaining portion within the first pattern and excluding the measured pattern based on the first area and the second area.

In this manner, when the measured patterns have an overlapping area, the first area of the first pattern formed by the outermost contour of the composite pattern is calculated first. Then, the second area of the measured pattern within the first pattern is calculated. Finally, the third area of the remaining portion within the first pattern, excluding the measured pattern, is calculated based on the first and second areas. In other words, the calculation method proposed in this disclosure not only calculates the area of the region of interest but also inversely calculates the area of the region of no interest. This capability is equally crucial for applications such as construction design in renovation projects.

In one embodiment of the present disclosure, the continuous region is associated with a first building material. The calculation method further comprises: determining construction information based on the area of the continuous region and the first building material. This approach enables the determination of construction information based on the area of a continuous region associated with a first building materials, such as calculating material costs, labor expenses, required construction time, tools, and other factors.

In one embodiment of the present disclosure, the calculation method further comprises: obtaining a selection for a first continuous region; and calculating the area of the first continuous region based on the measured patterns associated with the first continuous region.

In this manner, the area of the first continuous region can be calculated based on Boolean operations for different pattern combinations. For instance, when it involves two or more independent measured patterns, addition is used for calculation. Conversely, when the first continuous region of interest is an area within a larger pattern that excludes one or several smaller patterns, subtraction can be used for calculation.

Preferably, in one embodiment of the present disclosure, the first continuous region is constructed as an area formed by closed lines.

In one embodiment of the present disclosure, the calculation method further comprises: obtaining at least one height data associated with the continuous region; and calculating volume data associated with the continuous region based on the area of the continuous region and the height data.

This approach enables volume calculations based on height data in addition to area measurements, which is particularly crucial for construction projects such as excavating swimming pools or stacking flower beds.

In one embodiment of the present disclosure, the calculation method further comprises: determining the construction information based on the volume data and the first building material.

This approach enables the determination of construction information based on the volume data of the remaining portion associated with a first building material, such as calculating material costs, labor costs, required construction time, tools, and other factors.

Preferably, in one embodiment of the present disclosure, the calculation method further comprises: calculating the material cost of the required materials based on the volume data and the properties of the required materials.

Further preferably, in one embodiment of the present disclosure, the calculation method further comprises: moving the position of the remaining measured patterns in the first pattern to obtain a new composite pattern. This approach facilitates design modifications by users of the measuring device and enables them to promptly obtain specific data on the modified design, thereby streamlining construction and other operations.

Preferably, in one embodiment of the present disclosure, the calculation method further comprises: obtaining second height data associated with the measured pattern; and calculating second volume data associated with the measured pattern based on the area of the measured pattern and the second height data. This approach enables separate calculations for each section based on distinct elevation data when sections vary significantly in height, thereby allowing targeted acquisition of different volume data. This facilitates essential preparations for subsequent construction phases.

Preferably, in one embodiment of the present disclosure, the calculation method further comprises: calculating the quantity of required material based on the relationship between the third area and the unit area of the required material. For example, when laying floor tiles in the third area, the required quantity can be calculated based on the dimensions of each tile. Here, professionals in the field should understand that this quantity is not necessarily obtained directly through division. For instance, when the third area is not particularly regular, it is also necessary to consider whether existing-sized tiles need to be cut. Consequently, shape parameters must be comprehensively utilized to determine the required number of tiles.

Preferably, in one embodiment of the present disclosure, the calculation method further comprises: calculating the material cost of the required material based on the quantity of the required material.

Further preferably, in one embodiment of the present disclosure, the calculation method further comprises: calculating the construction cost of the required materials based on the quantity of required materials.

Further preferably, in one embodiment of the present disclosure, the calculation method further comprises: obtaining URL information of an e-commerce website; and generating an order via the URL information and based on the construction information. This approach not only enables the calculation of construction costs but also facilitates direct integration with e-commerce platforms. This allows for quick and convenient ordering, enabling the direct scheduling of required materials and even construction personnel to the designated location, thereby providing essential support for subsequent construction work.

To sum up, in the calculation method according to the present disclosure, it can not only design based on surveying results but also incorporate the user's selection of the relative position of at least two measured patterns, that is, different combinations of measured patterns. Furthermore, based on this foundation, it can calculate the area of at least one continuous region within the newly designed or selected combination of measured patterns. In other words, the area calculation for at least one new continuous zone is based on the delineation of measured patterns, but it is not limited to this. It also incorporates additional considerations, such as the user's design intent regarding the relative positioning of the delineated measured patterns. This will be particularly crucial for construction design.

### BRIEF DESCRIPTION OF THE DRAWINGS

The accompanying drawings illustrate and explain embodiments. These drawings serve to elucidate fundamental principles and thus show only those aspects necessary for understanding the underlying concepts. The drawings are not drawn to scale. In the drawings, the same reference numerals denote similar features.
Figure 1 illustrates one schematic diagram of an application scenario based on a calculation method based on at least two measured patterns measured by a measuring device according to an embodiment of the present disclosure;
Figure 2A illustrates another schematic diagram of an application scenario based on a calculation method based on at least two measured patterns measured by a measuring device according to an embodiment of the present disclosure;
Figure 2B illustrates another schematic diagram of an application scenario based on a calculation method based on at least two measured patterns measured by a measuring device according to an embodiment of the present disclosure;
Figure 3A illustrates still another schematic diagram of an application scenario based on a calculation method based on at least two measured patterns measured by a measuring device according to an embodiment of the present disclosure;
Figure 3B illustrates still another schematic diagram of an application scenario based on a calculation method based on at least two measured patterns measured by a measuring device according to an embodiment of the present disclosure; and
Figure 4 illustrates yet another schematic diagram of an application scenario based on a calculation method based on at least two measured patterns measured by a measuring device according to an embodiment of the present disclosure.

Other features, characteristics, advantages, and benefits of the present disclosure will become more apparent from the following detailed description in conjunction with the accompanying drawings.

### DETAILED DESCRIPTION OF THE EMBODIMENTS

In the specific description of the following preferred embodiments, reference will be made to the accompanying drawings, which form part of the present disclosure. The accompanying drawings exemplify specific embodiments capable of implementing the present disclosure. These exemplary embodiments are not intended to exhaust all possible implementations based on the present disclosure. It should be understood that other embodiments may be employed, and structural or logical modifications may be made without departing from the scope of the present disclosure. Therefore, the following detailed description is not intended to be limiting, and the scope of the present disclosure is defined by the appended claims.

To address the aforementioned technical problems in the prior art, namely that conventional surveying devices can essentially only measure the area of a single geometric pattern, but cannot measure the areas of multiple measured patterns or the new measured patterns formed by them, the inventors of the present disclosure innovatively conceived a novel calculation method. This method is implemented based on at least two measured patterns surveyed by the measuring device. It forms a composite pattern, i.e., a new measured pattern, by acquiring a relative position of the at least two measured patterns. Subsequently, after determining the relative position of the at least two measured patterns, the area of at least one continuous region within the composite pattern is calculated. Through this approach, it can not only design based on surveying results but also incorporate the user's selection of the relative position of at least two measured patterns, that is, different combinations of measured patterns. Furthermore, based on this foundation, it can calculate the area of at least one continuous region within the newly designed or selected combination of measured patterns. In other words, the area calculation for at least one new continuous zone is based on the delineation of measured patterns, but it is not limited to this. It also incorporates additional considerations, such as the user's design intent regarding the relative positioning of the delineated measured patterns. This will be particularly crucial for construction design.

In general, the present disclosure proposes a calculation method based on at least two measured patterns measured by a measuring device, wherein the at least two measured patterns are closed patterns. The calculation method comprises: obtaining a selection of a relative position of the at least two measured patterns to form a composite pattern; and calculating the area of at least one continuous region within the composite pattern after the relative position of the at least two measured patterns is determined.

The calculation method proposed in this disclosure enables users of measuring devices or surveying tools to perform secondary design on the measured patterns. Furthermore, the area of at least one continuous region within the secondary-designed pattern can also be calculated using the method proposed herein. Thus, the calculation of the area for this new continuous region is based on the patterns' construction. but is not limited to the drawing of the measured patterns. It also incorporates additional considerations, such as the user's design outcomes regarding the relative position of the measured patterns. This proves particularly crucial for construction design.

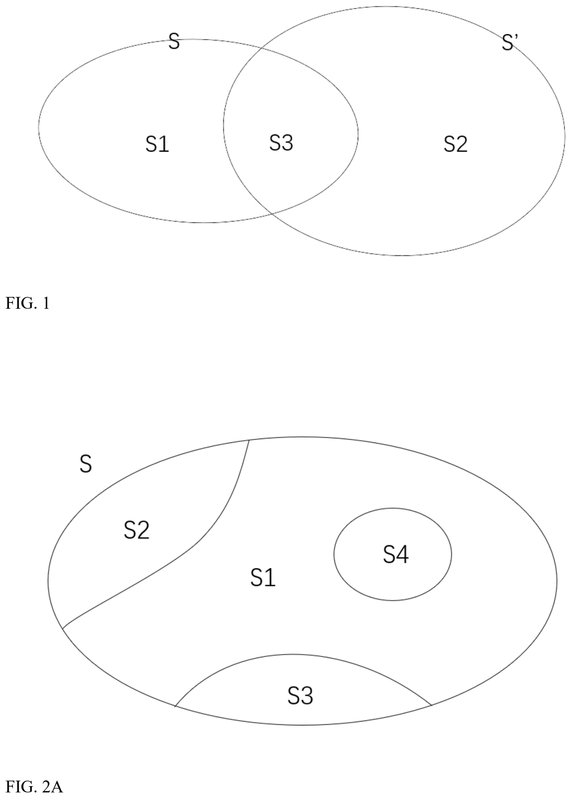

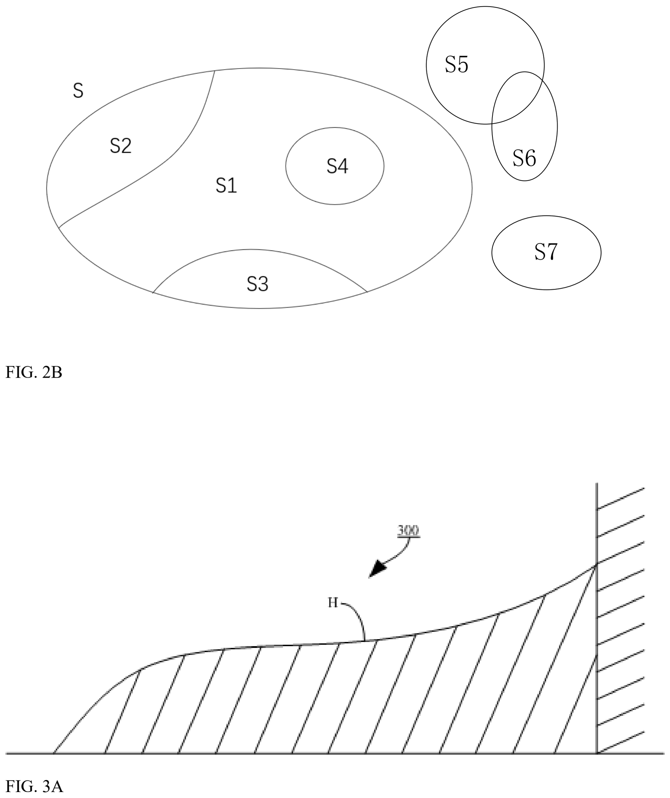

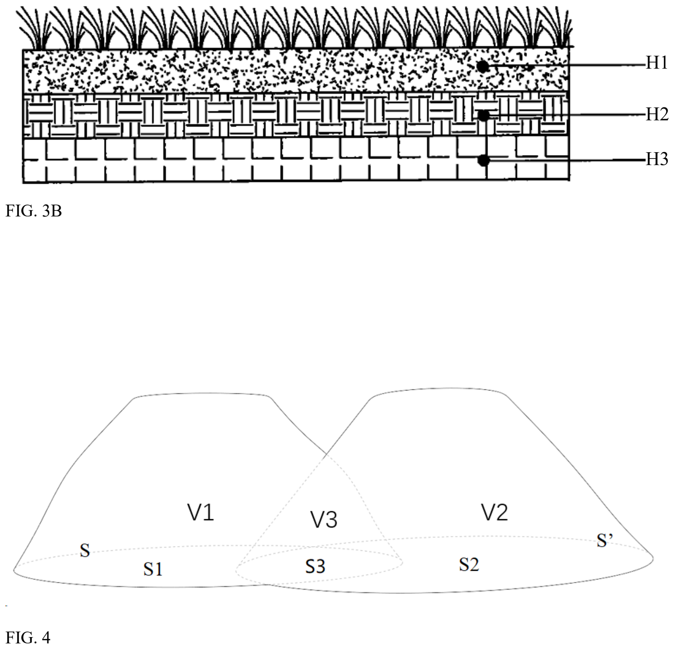

The following describes a calculation method based on at least two measurement patterns measured by a measuring device, as proposed by the present disclosure, with reference to the accompanying drawings. Figure 1 illustrates one schematic diagram of an application scenario based on a calculation method based on at least two measured patterns measured by a measuring device according to an embodiment of the present disclosure. Figure 2A illustrates another schematic diagram of an application scenario based on a calculation method based on at least two measured patterns measured by a measuring device according to an embodiment of the present disclosure. Figure 2B illustrates another schematic diagram of an application scenario based on a calculation method based on at least two measured patterns measured by a measuring device according to an embodiment of the present disclosure. Figure 3A illustrates still another schematic diagram of an application scenario based on a calculation method based on at least two measured patterns measured by a measuring device according to an embodiment of the present disclosure. Figure 3B illustrates still another schematic diagram of an application scenario based on a calculation method based on at least two measured patterns measured by a measuring device according to an embodiment of the present disclosure, and Figure 4 illustrates yet another schematic diagram of an application scenario based on a calculation method based on at least two measured patterns measured by a measuring device according to an embodiment of the present disclosure.

As shown in Figure 1, the measuring device plots two measured patterns, such as patterns S and S'. Subsequently, on the display interface, the operator can drag and manipulate patterns S and S', thereby affecting the area of the overlapping region between patterns S and S', that is, the area of S3, which in turn also affects the sizes of the non-overlapping regions S1 and S2. In other words, the present disclosure proposes a calculation method based on at least two measured patterns S and S' measured by the measuring device, wherein the at least two measured patterns S and S' are closed patterns. The calculation method comprises: obtaining a selection of a relative position of the at least two measured patterns S and S' (i.e., designing the specific location of the overlapping region between measured patterns S and S') to form a composite pattern, and after the relative position of the at least two measured patterns S and S' is determined, calculating the area of at least one continuous region within the composite pattern, such as the area of any one or more regions S1, S2, or S3. As illustrated in Figure 1: the calculation method proposed in this disclosure enables users of measuring devices or surveying tools to perform secondary design on the measured patterns S and S'. Moreover, the area of at least one continuous region (e.g., any one or multiple regions such as S1, S2, or S3) within the secondary-designed pattern (as shown in Figure 1) can also be calculated using the method proposed herein. Therefore, the area calculation for the new continuous region (any one or multiple regions within S1, S2, or S3) is calculated based on the delineation of the measurement pattern, but is not limited to this. It also incorporates additional considerations, such as the user's design outcomes regarding the relative position of the measured patterns. This proves particularly significant for construction design.

The example shown in Figure 1 features overlapping illustrations, but does not depict a scenario where a larger pattern completely encompasses a subsequent smaller pattern. The following description utilizes Figure 2 to illustrate an implementation form where patterns are mutually nested. Additionally, Figures 2A and 2B will be referenced to describe an example where volume calculation is performed concurrently with area calculation. However, those skilled in the art should understand that while volume calculation is a preferred implementation method, it is not mandatory. When implementing the inventive concept of this disclosure, those skilled in the art may perform area calculation alone or combine area and volume calculations. This does not affect the scope of protection claimed herein.

Specifically, as shown in Figure 2A, the measured pattern S represents the boundary of a certain area, i.e., a large measured pattern. Within this large measured pattern, the measured pattern S1 requires laying cement with thickness H1, the measured pattern S2 requires laying grass with thickness H2, the measured pattern S3 requires laying plastic with thickness H3, and the measured pattern S4 requires constructing a flower bed with height H4. Building upon Figure 2A, several additional measured patterns exist outside the large measured pattern S, such as S5, S6, and S7. Among these, S7 and the other measured patterns are mutually independent, while the measured patterns S5 and S6 share a partially overlapping region.

During actual operation, first use a measuring device such as a ranging wheel to trace the paths of regions S, S2, S3, and S4, forming each as a separate closed pattern. Then, within the display interface of the ranging wheel's application, the area results for multiple patterns can be directly calculated by dragging the relative position of each pattern. More preferably, height data for each area can be input into the ranging wheel's application to directly calculate the volume of each area. Then, preferably, the ranging wheel's application can also utilize an integrated e-commerce platform to select suitable filler material (such as bricks) based on measured area, volume, and other data, determining appropriate dimensions, models, colors, etc., thereby enabling one-click ordering. Further preferably, the system can calculate the quantity of fillers required, associated costs, and estimated project duration based on measured area, volume, and other data.

In general, real-world scenarios often involve Boolean operations between areas or volumes (summation, subtraction, intersection). Existing technologies struggle to directly calculate the results of such Boolean operations. To address this problem, the calculation method described herein determines how to perform Boolean operations by moving specific measured patterns and then analyzing their spatial relationships, such as nesting or overlapping, thereby calculating the area of the region of interest.

Furthermore, existing technologies cannot integrate e-commerce platforms with the ranging wheel's application. The calculation method proposed herein achieves this integration, enabling features such as free product selection and one-click ordering based on measured area, volume, and other data.

As illustrated in Figures 2A and 2B, in one embodiment according to the present disclosure, the at least two measured patterns have at least one partially overlapping region. The calculation method further comprises: obtaining a selection for at least one continuous region within the composite pattern; and calculating the area of the selected continuous region. For example, in Figures 2A and 2B, an operator may select a single continuous region S1 and then calculate the area of S1 using the pattern area calculation method. This approach enables the selection of a specific region of interest within the composite pattern after positional design, followed by calculation of the area of the selected continuous region. This enables area calculation for a region of interest, thereby providing essential support for subsequent tasks related to this region, such as cost estimation and material forecasting, which is particularly crucial for construction design in scenarios like interior decoration.

For the embodiments shown in Figures 2A and 2B, i.e., in the embodiments illustrated in Figure 1 according to the present disclosure, wherein the at least two measured patterns have at least a partially overlapping region, the calculation method further comprises: calculating a first area of the first pattern formed by the outermost contour of the composite pattern; calculating a second area of the measured pattern within the first pattern; and calculating a third area of the remaining portion within the first pattern, excluding the measured pattern, based on the first area and the second area. For example, the areas of measured patterns S, S2, S3, and S4 are first calculated. Then, for the selected continuous region S1, the area of S1 can be calculated by subtracting the smaller measured patterns S2, S3, and S4 from the larger measured pattern S. In this manner, when these measured patterns have overlapping regions, first calculate the first area of the first pattern formed by the outermost contour of the composite pattern; then calculate the second area of the measured pattern within the first pattern; finally, calculate the third area of the remaining portion within the first pattern excluding the measured patterns based on the first and second areas. In other words, the calculation method proposed in this disclosure not only calculates the area of the region of interest but also inversely calculates the area of the region of no interest. This is equally important for construction design tasks such as renovation planning.

In addition, preferably in one embodiment of the present disclosure, the continuous region is associated with a first building material. The calculation method further comprises: determining construction information based on the area of the continuous region and the first building material. This approach enables the determination of construction information based on the area of a continuous region associated with a first building materials, such as calculating material costs, labor expenses, required construction time, tools, and other factors.

In addition, in one embodiment of the present disclosure, the calculation method further comprises: obtaining a selection for a first continuous region; and calculating the area of the first continuous region based on the measured patterns associated with the first continuous region. For example, regions S2 and S3 in Figure 2 can be merged to form a continuous area. If this continuous area is selected, its area can be calculated by summing the areas of S2 and S3. In this manner, the area of the first continuous region can be calculated based on Boolean operations for different pattern combinations. For instance, when it involves two or more independent measured patterns, addition is used for calculation. Conversely, when the first continuous region of interest is an area within a larger pattern that excludes one or several smaller patterns, subtraction can be used for calculation.

Preferably, in one embodiment of the present disclosure, the first continuous region is constructed as an area formed by closed lines. For example, the region formed by S5 and S6 in Figure 2B.

Furthermore, as described in Figures 2A and 2B, in one embodiment of the present disclosure, the calculation method further comprises: obtaining at least one height data associated with the continuous region; and calculating volume data associated with the continuous region based on the area of the continuous region and the height data. This approach enables volume calculations based on height data in addition to area measurements, which is particularly crucial for construction projects such as excavating swimming pools or stacking flower beds.

In practical implementation, this height data can be obtained either through third-party sources, such as predefined drawings generated by design software, or by utilizing measurement tools. As shown in Figure 3A, which depicts a cross-section of a small slope (e.g., gravel pile), the height H varies at different locations. A distance wheel can be used to measure the volume of this slope (e.g., gravel pile). Specifically, first use the measuring wheel to trace the contour path of the slope, forming a closed pattern whose area can be calculated. Then, for example, attach an auxiliary small wheel to the rear of the measuring wheel and roll it along the slope's cross-section from start to end, collecting height data for each section. Subsequently, by using the known area and height data, the slope's volume can be calculated. Furthermore, feeding these results into the application's integrated e-commerce platform enables retrieval of quotations, project timelines, and other relevant information.

To obtain the construction plan, construction information must first be acquired. For this purpose, in one embodiment of the present disclosure, the calculation method further comprises: determining the construction information based on the volume data and the first building material. This approach enables the determination of construction information based on the volume data of the remaining portion associated with a first building material, such as calculating material costs, labor costs, required construction time, tools, and other factors.

Preferably, in one embodiment of the present disclosure, the calculation method further comprises: calculating the material cost of the required materials based on the volume data and the properties of the required materials. For example, laying a ground surface may require pebble materials, but pebbles possess multiple attributes such as size, density, and shape. Designers can predefine material properties like density, or obtain material attributes from e-commerce platforms to calculate corresponding material costs. Further preferably, in one embodiment of the present disclosure, the calculation method further comprises: moving the position of the remaining measured patterns in the first pattern to obtain a new composite pattern. This approach facilitates design modifications by users of the measuring device and enables them to promptly obtain specific data on the modified design, thereby streamlining construction and other operations.

Preferably, in one embodiment of the present disclosure, the calculation method further comprises: obtaining second height data associated with the measured pattern; and calculating second volume data associated with the measured pattern based on the area of the measured pattern and the second height data. This approach enables separate calculations for each section based on distinct elevation data when sections vary significantly in height, thereby allowing targeted acquisition of different volume data. This facilitates essential preparations for subsequent construction phases. For example, as shown in Figure 3B, multiple layers can be laid over a given measured area. This might involve first laying a brick layer with thickness H3, followed by a permeable layer with thickness H2, and then a soil and turf layer with thickness H1. Therefore, based on the aforementioned height data or thickness data, the volume of each layer can be calculated, enabling the determination of material quantities and construction-related information.

Additionally, for epoxy resin flooring applications, multiple functional zones (e.g., restrooms, utility shafts, marble thresholds) and column areas require deductions. These zones are excluded from epoxy resin coverage. First, calculate the area requiring epoxy resin application. These epoxy-coated areas are further divided into passageways and heavy-duty work zones, each with configurable coating thicknesses. For instance, passageways may require thinner coatings while heavy-duty zones demand thicker applications. This allows for calculating the total epoxy resin requirement and corresponding procurement.

Preferably, in one embodiment of the present disclosure, the calculation method further comprises: calculating the quantity of required material based on the relationship between the third area and the unit area of the required material. For example, when laying floor tiles in the third area, the required quantity can be calculated based on the dimensions of each tile. Here, professionals in the field should understand that this quantity is not necessarily obtained directly through division. For instance, when the third area is not particularly regular, it is also necessary to consider whether existing-sized tiles need to be cut. Consequently, shape parameters must be comprehensively utilized to determine the required number of tiles.

Preferably, in one embodiment of the present disclosure, the calculation method further comprises: calculating the material cost of the required material based on the quantity of the required material. Further preferably, in one embodiment of the present disclosure, the calculation method further comprises: calculating the construction cost of the required materials based on the quantity of required materials. Further preferably, in one embodiment of the present disclosure, the calculation method further comprises: obtaining URL information of an e-commerce website; and generating an order via the URL information and based on the construction information. This approach not only enables the calculation of construction costs but also facilitates direct integration with e-commerce platforms. This allows for quick and convenient ordering, enabling the direct scheduling of required materials and even construction personnel to the designated location, thereby providing essential support for subsequent construction work.

The following describes a specific application scenario for combined height measurement with reference to Figure 4. As shown in Figure 4, the ground projection of two mountains is depicted, where S3 represents the overlapping area of their projections, S = S1 + S3, and S' = S2 + S3. Now, stones are stacked in area S and soil blocks in area S2. The volume of each area is calculated as follows:
Step 1: Drive the distance wheel around the perimeter of region S to trace its contour, forming a closed pattern. Determine the area S of this enclosed region.
Step 2: Drive the distance wheel around the perimeter of region S' to trace its contour, forming a closed pattern. Determine the area S' of this enclosed region.
Step 3: Calculate the area of the overlapping region S3 (using an irregular pattern calculation method, such as the grid method).
Step 4: Measure or input multiple heights corresponding to region S to calculate its volume (these heights may be identical or different);
Step 5: Measure or input multiple heights corresponding to region S' to calculate its volume (these heights may be identical or different);
Step 6: Further, calculate the volume V3 of region S3 by inputting the corresponding height of the intersecting region S3;
Step 7: When the material of the intersecting region V1 is the same as that of V3, the volume V of the rock-piled area is V1 + V3, and the volume V2 of the sand-piled area is V' - V3.

The above example uses sand or gravel piles with known heights. In another implementation, when a site already contains two overlapping mounds, one with gravel stacked in area S and another with soil blocks in area S2, the steps to calculate the volumes of gravel and soil blocks are as follows:
Steps 1-3: Same as the steps described above.
Step 4: Roll the measuring wheel with auxiliary wheels along one side of the small slope from its starting point to the endpoint on the other side, collecting height data for the stacked stones in area S1. Similarly, collect height data for the stacked soil blocks in area S2.
Step 5: Using the known area and height data, calculate the volume V1 of area S and the volume V2 of area S2.
Step 6: The volume V3 of the overlapping region S3 can be calculated.

To sum up, in the calculation method according to the present disclosure, it can not only design based on surveying results but also incorporate the user's selection of the relative position of at least two measured patterns, that is, different combinations of measured patterns. Furthermore, based on this foundation, it can calculate the area of at least one continuous region within the newly designed or selected combination of measured patterns. In other words, the area calculation for at least one new continuous zone is based on the delineation of measured patterns, but it is not limited to this. It also incorporates additional considerations, such as the user's design intent regarding the relative positioning of the delineated measured patterns. This will be particularly crucial for construction design.

Although various exemplary embodiments of the present disclosure have been described, it will be apparent to those skilled in the art that various changes and modifications may be made without departing from the spirit and scope of the present disclosure to achieve one or more of the advantages of the present disclosure. For those skilled in the art, other components performing the same function may be appropriately substituted. It should be understood that features illustrated with reference to specific drawings may be combined with features from other drawings, even where such combination is not explicitly mentioned. Furthermore, the methods of the present disclosure may be implemented either entirely in software using appropriate processor instructions or in hybrid implementations utilizing a combination of hardware logic and software logic to achieve the same result. Such modifications to the schemes of the present disclosure are intended to be covered by the appended claims.

## Claims

1. calculation method based on at least two measured patterns measured by a measuring device, wherein the at least two measured patterns are closed patterns, **characterized in that** the calculation method comprises:
obtaining a selection of a relative position of the at least two measured patterns to form a composite pattern; and
calculating the area of at least one continuous region within the composite pattern after the relative position of the at least two measured patterns is determined.

2. The calculation method according to claim 1, wherein the at least two measured patterns at least have a partially overlapping region, **characterized in that** the calculation method further comprises:
acquiring a selection for at least one continuous region within the composite pattern; and
calculating the area of the selected continuous region.

3. The calculation method according to claim 1, wherein the at least two measured patterns at least have a partially overlapping region, **characterized in that** the calculation method further comprises:
calculating a first area of the first pattern formed by the outermost contour of the composite pattern;
calculating a second area of a measured pattern within the first pattern;
calculating a third area of the remaining portion within the first pattern and excluding the measured pattern based on the first area and the second area.

4. The calculation method according to claim 1 or 2, wherein the continuous region is associated with a first building material, the calculation method further comprising:
determining construction information based on the area of the continuous region and the first building material.

5. The calculation method according to claim 2, **characterized in that** the calculation method further comprises:
obtaining a selection for a first continuous region, wherein the first continuous region comprises mutually independent measured patterns; and
calculating the area of the first continuous region based on the measured patterns associated with the first continuous region.

6. The calculation method according to claim 5, **characterized in that** the first continuous region is constructed as an area formed by closed lines.

7. The calculation method according to claim 1, **characterized in that** the calculation method further comprises:
obtaining at least one height data associated with the continuous region; and
calculating volume data associated with the continuous region based on the area of the continuous region and the height data.

8. The calculation method according to claim 7, **characterized in that** the calculation method further comprises:
determining the construction information based on the volume data and the first building material.

9. The calculation method according to claim 7, **characterized in that** the calculation method further comprises:
calculating the material cost of the required materials based on the volume data and the properties of the required materials.

10. The calculation method according to claim 3, **characterized in that** the calculation method further comprises:
moving the position of the remaining measured patterns in the first pattern to obtain a new composite pattern.

11. The calculation method according to claim 3, **characterized in that** the calculation method further comprises:
obtaining second height data associated with the measured pattern; and
calculating second volume data associated with the measured pattern based on the area of the measured pattern and the second height data.

12. The calculation method according to claim 3, **characterized in that** the calculation method further comprises:
calculating the quantity of required material based on the relationship between the third area and the unit area of the required material.

13. The calculation method according to claim 12, **characterized in that** the calculation method further comprises:
calculating the material cost of the required material based on the quantity of the required material.

14. The calculation method according to claim 12 or 13, **characterized in that** the calculation method further comprises:
calculating the construction cost of the required materials based on the quantity of required materials.

15. The calculation method according to claim 2, **characterized in that** the calculation method further comprises:
obtaining URL information of an e-commerce website; and
generating an order via the URL information and based on the construction information.
